Europäisches Patentamt

European Patent Office

Office européen des brevets

(11) Veröffentlichungsnummer: **0 217 380 B1**

## (12) EUROPÄISCHE PATENTSCHRIFT

(45) Veröffentlichungstag der Patentschrift: **22.01.92**

(21) Anmeldenummer: **86113513.5**

(22) Anmeldetag: **01.10.86**

(51) Int. Cl.⁵: **C08F 214/06**, C08F 2/24, C09D 127/06, C08F 265/04, //(C08F214/06,210:02,220:02, 220:10)

(54) Verfahren zur Herstellung von Bindemitteln für Anstrichfarben und Putze.

(30) Priorität: **03.10.85 DE 3535389**

(43) Veröffentlichungstag der Anmeldung:
**08.04.87 Patentblatt 87/15**

(45) Bekanntmachung des Hinweises auf die Patenterteilung:
**22.01.92 Patentblatt 92/04**

(84) Benannte Vertragsstaaten:
**AT BE CH DE FR GB IT LI NL SE**

(56) Entgegenhaltungen:
**EP-A- 0 007 531**
**EP-A- 0 076 511**
**EP-A- 0 124 759**

(73) Patentinhaber: **WACKER-CHEMIE GMBH**
**Prinzregentenstrasse 22**
**W-8000 München 22(DE)**

(72) Erfinder: **Ball, Peter, Dr,**
**Ketteler Strasse 11**
**W-8261 Emmerting(DE)**
Erfinder: **Goetze, Richard, Dr.**
**Botzenstrasse 7**
**W-8261 Mehring-Öd(DE)**
Erfinder: **Marquardt, Klaus, Dr.**
**Lindacherstrasse 77**
**W-8263 Burghausen(DE)**
Erfinder: **Selig, Manfred, Dr.**
**Regerstrasse 85**
**W-8263 Burghausen(DE)**

EP 0 217 380 B1

**Beschreibung**

Wäßrige Copolymerdispersionen mit einem überwiegenden Gehalt an Vinylchlorid und Ethylen eignen sich auch als Bindemittel für Anstrichfarben. Verbesserte, besonders wirtschaftliche Verfahren zu ihrer Herstellung wurden in den EP-A-76 511 und 124 759 beschrieben. An Putze und an Anstrichfarben, insbesondere an solche, die hochgefüllt sind, werden aber besondere Anforderungen gestellt, insbesondere hinsichtlich ihrer Haftfestigkeit auf dem Untergrund, ihrer Beständigkeit gegen Rißbildung und ihrer Scheuerbeständigkeit. In einer ersten Vorprüfung, in der auf Glasplatten aufgezogene Dispersionsfilme in Wasser gelagert werden,kann bereits ein großer Teil solcher Dispersionen als nicht befriedigend für den obigen Zweck ausgeschieden werden. Ungenügende Beständigkeit zeigt sich dabei durch starkes Weißanlaufen und schneller Ablösung von der Glasplatte. Weiterhin scheitern viele weitere Dispersionen in der weiteren anwendungstechnischen Prüfung z.B. hinsichtlich Pigmentbindevermögen, Scheuerbeständigkeit und Rißbeständigkeit. Es bestand daher die Aufgabe, gezielt solche wäßrige Copolymerdispersionen mit einem überwiegenden Gehalt an Vinylchlorid (VC) und Ethylen (E) herzustellen, die die vorstehenden Qualitätskriterien für Anstrichfarben und Putze erfüllen, sich dahingehend besonders durch verbesserte Eigenschaften auszeichnen und daher besonders gut zur Herstellung qualitativ hochwertiger Beschichtungsmittel und Beschichtungen geeignet sind.

Diese Aufgabe konnte überraschend gut durch das in den Ansprüchen gekennzeichnete Verfahren gelöst werden.

Gegenstand der Erfindung ist ein Verfahren zur Herstellung wäßriger Copolymerdispersionen mit Festgehalten von 45 - 55 Gewichts-% durch Emulsionspolymerisation von

a) 75 - 95 Gewichtsteilen (= GT) von Acrylsuaure-und/oder Methacrylsäure-$C_1$-bis-$C_{10}$-Alkylestern, von denen 20-80 Gewichts-% eine Wasserlöslichkeit von höchstens 2 g/l und 80-20 Gewichts-% eine Wasserlöslichkeit von mindestens 10 g/l aufweisen,

b) 5 - 25 Gewichtsteilen eines Gemisches ethylensich ungesättigter, funktioneller und wasserlöslicher Monomeren mit einem Anteil von 25-100 Gewichts-% an ungesättigten Carbonsäuren,

c) 500-1700 Gewichtsteilen eines Gemisches von 70 - 100 Gewichts-% Vinylchlorid, 0-30 Gewichts-% eines oder mehrerer Vinylester gesättigter $C_2$-bis $C_{18}$-Carbonsäuren und 0 - 1,5 Gewichts-% eines mehrfach ungesättigten Monomeren mit einer Wasserlöslichkeit von höchstens 5 g/l und

d) Ethylen

mittels Radikalinitiator in Gegenwart von Emulgatoren und gegebenenfalls weitere üblicher Zusätze, das dadurch gekennzeichnet ist, daß

(1) die unter a) und b) genannten Bestandteile zusammen mit 500 - 1000 Gewichtsteilen Wasser und 0,5 - 10 Gewichtsteilen Emulgator bei einem pH-Wert von 2-4 in einem Autoklaven vorgelegt werden, und ihre Polymerisation bei einer Temperatur von 50 - 80 ˚C durch Zugabe eines Initiators begonnen wird,

(2) die unter c) genannten Bestandteile in Form einer wäßrigen Emulsion dosiert werden, sobald die unter a) und b) genannten Bestandteile zu mindestens 50 % und höchstens 99 % umgesetzt sind,

(3) während der Dosierphase ein pH-Wert von 4,5 - 6,5 eingehalten wird,

(4) ein Ethylendruck von 40 - 80 bar zu dem unter (2) genannten Zeitpunkt aufgebaut wird und

(5) vor Beginn der Polymerisation oder spätestens zu dem unter (2) genannten Zeitpunkt 10 - 50 Teile einer inerten organischen Substanz mit einer Wasserlöslichkeit von $10^{-3}$ bis 200 g/l und einem Molekulargewicht von höchstens 1000 zugegeben werden.

Bei dem erfindungsgemäßen Verfahren werden die unter b) genannten funktionellen Monomeren so günstig in das übrige Polymere eingebaut, daß die zur Herstellung qualitativ hochwertiger Beschichtungen notwendigen Bindemitteleigenschaften erreicht werden. Gleichzeitig gelingt der Einbau der gewünschten Mengen Ethylen bereits bei relativ niedrigen Drucken und kurzen Reaktionszeiten.

Im folgenden wird eine spezielle und daher bevorzugte Ausführungsform des Verfahrens näher beschrieben. Dazu werden die unter b) genannten Monomeren, 500 - 1000 vorzugsweise 600 - 700 Gewichtsteile entionisiertes Wasser, 0,5 - 10, vorzugsweise 1 - 5 Gewichtsteile eines vorzugsweise anionischen Emulgators oder Emulgatorengemisches und ggf. weitere in der Emulsionspolymerisation üblihce Zusätze wie Puffer, Regler und Inhibitoren gemischt und ein pH-Wert im Bereich von 2 bis 4, vorzugsweise von 2,7 bis 3,5 eingestellt. Zur pH-Einstellung werden bevorzugt flüchtige Säuren oder Basen, wie z.B. Ameisensäure oder Ammoniak verwendet. Nach Zugabe der unter a) genannten Monomeren und Einstellen der Polymerisationstemperatur von 50-80, bevorzugt 65 - 75 ˚C wird die Polymerisation durch Zugabe eines Initiators eingeleitet. Die Radikalbildungsgeschwindigkeit des Initiators sollte dabei vorzugsweise so eingestellt werden, daß der über eine bromometrische Titration erfaßbare Gehalt an Doppelbindungen in der Vorlage innerhalb 30 - 45 min. nach Reatkionsbeginn auf 5 % des Ausgangswertes abgenommen hat (= 95 %iger Umsatz) Sobald die unter a) und b) genannten Monomeren zu 50 - 99, vorzugsweise 85 - 95 % umgesetzt sind, wird ein Ethylendruck zwischen 40 und 80 bar, vorzugsweise 55 - 70 bar eingestellt und mit der Zugabe der unter c) beschriebenen Voremulsion begonnen. Die Zugabegeschwindigkeit wird dabei so eingestellt, daß der Ethylendruck nicht von selbst ansteigt, sondern gleich bleibt oder leicht abfällt. Sofern erwünscht, kann der Druck während der Reaktionszeit auch durch Nachdrükken von Ethylen kontant gehalten werden. Es ist aber auch möglich, den Druck gezielt durch Nachdrücken zu steigern, oder ihn z.B. durch Ablassen abfallen zu lassen. Bevorzugt hält man den Druck während der Zugabe der Bestandteile c) konstant und läßt ihn anschließend durch Schließen der Ethylenzufuhr abfallen.

Nach Beendigung der Zugabe der Bestandteile c) wird die Zufuhr von Initiator und damit die Bildung von Radikalen aufrechterhalten, bis die eingesetzte Menge Vinylchlorid zu mehr als 99 % umgesetzt ist. Anschließend wird der pH-Wert der Dispersion auf Werte zwischen 7 und 10, vorzugsweise 7,5 bis 8,5 eingestellt, noch vorhandener Überdruck abgelassen, die Dispersion durch Anlegen von Vakuum entgast und anschließend abgekühlt.

In den Komponenten a) bis c) können jeweils eines oder mehrere der im folgenden genannten Beispiele eingesetzt werden:

Als Bestandteile des Gemisches a) eignen sich die Ester der Acrylsäure und der Methacrylsäure mit geradkettigen oder verzweigten aliphatischen $C_1$-bis $C_{10}$-Alkoholen. Eine Tabelle zur Wasserlöslichkeit dieser Ester findet sich in "Vinyl and Diene Monomers, Part 1", E.C. Leonard Ed., Wiley-Interscience, New York (1970) S. 149ff.

Geeignete Ester der Acrylsäure und Methacrylsäure mit einer Wasserlöslichkeit unter 2 g/l sind z.B. Butylacrylat, Ethylhexylacrylat, Ethylmethacrylat oder Butylmethacrylat; vorzugsweise Butylacrylat, Butylmethacrylat und/oder Ethylhexylacrylat.

Geeignete Ester mit einer Wasserlöslichkeit über 10 g/l sind z.B. Methylacrylat, Ethylacrylat und/oder methylmethacrylat; besonders bevorzugt sind Ethylacrylat und/oder Methylmethacrylat.

Als Bestandteile des Gemisches b) eignen sich Acryl,-Methacryl-, Itakon-, Fumar- und Maleinsäure, deren Alkali- und Ammoniumsalze, deren Mono- und Diamide, die am Stickstoff ein- oder zweifach durch die Methylolgruppe substituiert sein können, Monoester der genannten Dicarbonsäuren mit $C_1$- bis $C_3$-Alkanolen, Vinylsulfonate und mit Sulfonatgruppen substituierte Ester und/oder Amide ungesättigter Carbonsäure, mit Sulfatgruppen substituierte Styrole, N-Vinylpyrrolidon, mit Hydroxylgruppen substituierte Ester ungesättigter Carbonsäuren. Bevorzugte wasserlösliche Monomere sind Acrylsäure, Methacrylsäure, deren Alkali- und Ammoniumsalze, Acrylamid, Methacrylamid, N-Methylolacrylamid, N-Methylolmethacrylamid, Vinylsulfonat, Hydroxyethyl(meth)acrylat, mit Sulfonatgruppen substituierte Ester und/oder Amide der (Meth-)Acrylsäure, wie z.B. Sulfoethyl(meth)-acrylat oder Sulfopropyl(methy)acrylat. Besonders bevorzugt sind Acrylsäure, Methacrylsäure und Acrylamid.

Als Vinylester im Gemisch c) eignen sich Vinylacetat, Vinylpropionat, Vinylbutyrat, Vinyl-2-ethylhexanoat, Vinyllaurat und die Vinylester der Versatic[(R)]- Säuren. Bevorzugt sind die Vinylester der Versatic[(R)]-Säure mit 10 C-Atomen im Säurerest und Vinyllaurat.

Als mehrfach ungesättigte Monomere mit einer Wasserlöslichkeit unter 5 g/l eignen sich die Vinyl- und Allylester von gesättigten und ungesättigten $C_4$- bis $C_{10}$- Dicarbonsäuren und Di- und Polyester von $\alpha,\beta$-ungesättigten Carbonsäuren mit polyfunktionellen Alkoholen. Besonders bevorzugt ist Divinyladipat. Vernetzer mit hydrophilen Eigenschaften sind deutlich weniger geeignet und werden daher vorzugsweise in Komponente c nicht eingesetzt.

Als inerte Substanzen, die in der EP-A-76 511 bereits genannt sind und vor oder während der Polymerisation des Gemisches a) und b) zugegeben werden, eignen sich die Verbindungen der folgenden Gruppe 1 - 5, die einzeln oder als Gemische eingesetzt werden können. Bevorzugt eingesetzt werden die Verbindungen der Gruppe 1.

1. Ester, Teilester und Polyester ein- oder mehrbasischer organischer Säuren (1 bis 20, bevorzugt 2 bis 8 C-Atome/Säuremolekül)mit ein- oder mehrwertigen Alkoholen (1 bis 20, bevorzugt 2 bis 8 C-Atome/Alkoholmolekül), deren C-Atom-Kette sowohl im Säure- als auch im Alkoholrest durch bis zu 3 Sauerstoffatome unterbrochen (Etherbindung) oder durch Epoxy-, $C_1$- bis $C_8$-Alkoxy-, Phenoxy- und/oder Hydroxygruppen substituiert sein kann.

Beispiele für geeignete Säuren zur Bildung solcher Ester sind:

Ameisen-, Essig-, Propion-, Butter-, Valerian-, Capron-, Capryl-, Caprin-, Ethylbutter- oder Ethylhexansäure, Pelargonsäure, Laurinsäure oder Benzoesäure, Oxal-, Malon-, Bernstein-, Glutar-, Adipin-, Sebacin-, Phthal-, Hexahydrophthal-, Trimellith-, Glykol-, Zitronen-, Wein-, Milch- oder Ricinolsäure und ihre Alkoxyderivate, epoxidierte Sojafettsäure, Epoxystearinsäure.

Beispiele für zur Veresterung mit den vorstehend genannten Säuren geeignete Alkohole sind:

Methanol , Ethanol , Propanole , Butanole , Pentanole , Hexanole , Heptanole oder Octanole, Cyclohexanol, Benzylalkohol, Ethylenglykol, Diethylenglykol, Triethylenglykol, Propan-, Butan-, Hexandiole , Trime-

3

thylolpropan, Pentaerythrit, Glycerin, Methyl-, Ethyl-, Butylglykol oder -diglykol, Phenylglykol, Glycidol.

Beispiele für besonders bevorzugte Ester sind:

Butyl(di)glykolacetat, Diethylenglykoldibenzoat, Triethylenglykoldibenzoat, Triethylenglykoldiethylbutyrat, Dibutylphthalat, Diethylhexylphthalat (Dioctylphthalat), Dibutyladipat, Dioctyladipat, Dimethylglykolphthalat, Butylphthalylbutylglykolat, Methyl- und Ethylphthalylethylglykolat, Diethoxyethyladipat, Dibutoxyethyladipat und -phthalat, Oligoester aus Triethylenglykol und Adipinsäure. 2,2,4-Trimethylpentandiol-1,3-Monoisobutyrat, Butylbenzylphthalat, Butylkresylphthalat.

2. Ester der Phophorsäure mit ggf. substituenten Phenolen und/oder mit einwertigen Alkoholen (1 bis 20, vorzugsweise 2 bis 8 C-Atome/Alkoholmolekül), deren C-Atomkette durch bis zu 3 Sauerstoffatome unterbrochen oder durch $C_1$- bis $C_8$-Alkoxy oder Phenoxygruppen oder Chloratome substituierten sein kann. Beispiele für geeignete und bevorzugte Ester sind:

Trioctylphosphat,Trichlorethylphosphat,Tributylphosphat, Tributylglykolphosphat, Kresyldiphenylphosphat,Triphenylphosphat.

3. Ether und Acetale mit 4 bis 20 C-Atomen je Molekül, deren C-Atomkette durch 1 bis 3 Sauerstoffatome unterbrochen oder durch $C_1$- bis $C_8$- Alkoxy- oder Phenoxygruppen substituiert sein kann.

Beispiel für geeignete Ether und Acetale sind z.B. Dibutylether, Dibenzylether oder Dibutoxyethoxyethylformal.

Bevorzugt ist z.B. Diphenoxyethylformal.

4. Chlor- und Fluorkohlenwasserstoffe mit 1 bis 20 C-Atomen je Molekül, deren C-Atome jeweils mit maximal 2 Chloratomen substituiert sein können, wie z.B. Methylenchlorid, Dichlorethan, 1,1,3-Trichlor-1,2,2-Trifluorethan, Chlorbenzol, Chlordiphenyle, bevorzugt aus dieser Gruppe ist z.B. Methylenchlorid.

5. Aromatische Kohlenwasserstoffe mit 5 bis 20 C-Atomen je Molekül, wie. z.B. Benzol, Toluol, Xylole; bevorzugt ist z.B. Toluol.

Geeignete Emulgatoren sind nichtionische oder anionische Tenside wie z.B.

1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 40 Ethylen- bzw. Propylenoxideinheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen im Alkylrest; ggf. können diese Alkohole oder Alkylphenole auch mit 1 - 40 Ethylenoxid-(EO-)Einheiten ethoxyliert sein.

3. Phosphorsäureteilester und deren Alkali- und Ammoniumsalze, besonders Alkyl- bzw. Alkylarylphosphate mit 8 bis 20 C-Atomen im organischen Rest, Alkylether- bzw. Alkylaryletherphosphate mit 8 bis 20 C-Atomen im Alkyl- bzw. Alkylarylrest und 1 bis 40 EO-Einheiten.

4. Alkylpolyglykolether bevorzugt mit 8 bis 40 EO-Einheiten und Alkylresten von 8 bis 20 C-Atomen.

5. Alkylarylpolyglykolether bevorzugt mit 8 bis 40 EO-Einheiten und 8 bis 20 C-Atomen in den Alkyl- und Arylresten.

6. Ethylenoxid/Propylenoxid (EO/PO)-Blockcopolymere bevorzugt mit 8 bis 40 EO- bzw. PO-Einheiten.

Bevorzugte anionische Emulgatoren bei der Polymerisation des Gemisches a) und b) sind die Vertreter der Gruppen 1 und 2 mit weniger als 10 Ethylenoxideinheiten, besonders bevorzugt die ethoxylgruppenfreien Emulgatoren.

Bevorzugte Emulgatoren bei der Polymerisation bei und nach der Zugabe des Gemisches c) sind die ethoxylierten Vertreter der Gruppen 1 bis 3 die Gruppen 4 und 5. Besonders bevorzugt sind die ethoxylierten Vertreter der Gruppe 1.

Die Polymerisation wird mit den für die Emulsionspolymerisation üblicherweise eingesetzten Methoden eingeleitet. Besonders geeignet sind zumindest teilweise wasserlösliche, bevorzugt gänzliche wasserlösliche anorganische oder organische peroxidische Verbindungen, wie Peroxoverbindungen, Hydroperoxide und Perester sowie wasserlösliche Azoverbindungen. Genannt seien Alkali- und Ammoniumperoxosulfate, -peroxodisulate und -peroxophosphate, Wasserstoffperoxid, tertiär-Butylhydroperoxid, Axobiscyanovaleriansäure, tertiär-Butylpermaleinat.

Gegebenenfalls können die genannten Peroxidinitiatoren auch in bekannter Weise mit Reduktionsmitteln kombiniert werden. Geeignet sind z.B. Alkali-Formaldehyd-sulfoxylate (Brüggolith[R],Rongalit[R], Alkalibisulfite, -sulfite, -thiosulfate und Ascorbinsäure. Vielfach ist dann auch der an sich bekannte Zusatz geringer Mengen von Schwermetallverbindungen, z.B. vonEisen-II-Salzen angezeigt.

Besonders bevorzugt ist die thermische Polymerisation mit Alkali- oder Ammoniumperoxo(di)sulfaten.

Zur Emulsionspolymerisation können weiter übliche Hilfsmittel wie Puffersubstanzen, Regler oder Inhibitoren gegen vorzeitige Polymerisation zugegeben werden.

Gemäß der Erfindung werden Dispersionen erhalten, deren Polymere vorzugsweise folgende Zusammensetzung haben:

4

jeweils bis zu

82,insbes.63 bis 77, Gew.% Vinylchlorideinheiten

25,insbes.14 bis 20, Gew.% Ethyleneinheiten

25,insbes. 2 bis 5, Gew.% Vinylestereinheiten

15,insbes. 6 bis 10, Gew.% (Meth-)Acrylsäureestereinheiten (Komponente a)

4,insbes. 1 bis 1,5, Gew.% Einheiten der funktionellen und wasserlöslichen Monomeren (Komponente b)

1,2, insbes.0,1 bis 0,5 Gew.% Einheiten mehrfach ungesättigter Monomeren.

Dabei fällt auf, daß die Monomeren - abgesehen vom Ethylen-stets praktisch vollständig in die Polymeren eingebaut werden.

Die erfindungsgemäß hergestellten Dispersionen eignen sich zur Herstellung von kunststoffgebundenen Putzen mit guter Wasserfestigkeit und von Farben für Innen- und Außenanstriche mit guter Scheuerbeständigkeit. Die Farben, insbesondere für den Innenbereich können auch hochgefüllt werden.

Die Erfindung wird durch folgende Beispiele erläutert:(%-Angaben beziehen sich, soweit nicht auf den Umsatz, bzw. soweit nicht anders angegen, auf das Gewicht).

A) Herstellung der Ausgangsdispersionen Beispiel 1

In einem Rührautoklaven mit 16 l Inhalt wurden 3655 ml entionisiertes Wasser, 231 g einer 15 %igen wäßrigen Na-Dodecylbenzolsulfonatlösung, 116 g einer 30 %igen wäßrigen Acrylamidlösung und 69 g Methacrylsäure gemischt. Der pH-Wert dieser Mischung wurd mit verdünntem Ammoniak auf 3,5 eingestellt. Anschließend wurde evakuiert, mit Stickstoff gespült, erneut evakuiert und ein Gemisch aus 347 g Butylacrylat, 347 g Methylmethacrylat und 231 g eines Dibutylestergemisches von $C_4$- bis $C_6$-Dicarbonsäuren (Lusolvan FBH[R], BASF AG, Ludwigshafen (DE) ) eingesaugt. Dieses Gemisch war vorher durch Zugabe von 146 mg Benzochinon gegen verzeitige Polymerisaiton stabilisiert worden.

Nach Aufheizen auf 70 °C wurden 185 ml 10 %ige wäßrige Ammoniumpersulfatlösung innerhalb 3 Minuten zugegeben. 45 Minuten später waren die vorgelegten Monomeren zu 97 % umgesetzt. Zu diesem Zeitpunkt wurden 70 bar Ethylen aufgedrückt. Gleichzeitig begann die Dosierung von 10 %iger, wäßriger Ammonpersulfatlösung mit 29 ml/h und einer Voremulsion aus 2617 ml Wasser, 832 g einer 35 %igen wäßrigen Lösung eines Nonylphenolpolyethylenoxidsulfats (aus ca. 25 Mol Ethylenoxid pro Mol Emulgator), 5950 g Vinylchlorid und 29,7 g Divinyladipat mit einer Geschwindigkeit von 1750 ml/h. Der pH-Wert wurde während dieser Dosierung durch Ammoniakzugabe zwischen 5,1 und 5,6 und der Ethylendruck bei 70 bar gehalten. Nach Beendigung der Voremulsionsdosierung wurde auch die Initiator- und Ethylendosierung eingestellt und der Reaktorinhalt noch eine Stunde bei 70 °C gehalten. Während dieser Zeit wurde der pH-Wert durch Ammoniakzugabe auf 8,5 eingestellt. Anschließend wurde der Ethylendruck abgeblasen, und die Dispersion eine Stunde im Vakuum gerührt. Analysen ergaben einen Ethylengehalt von 17 %, einen Festgehalt von 48,8 % und eine Viskosität (Brookfield-Viskosimeter, 20 °C, 20 Upm) von 390 mPa.s. Der elektronenmikroskopisch ermittelte Teilchendurchmesser betrug 0,09 μm, Das Produkt zeigte einen K-Wert (DIN 53 276, gemessen in THF/$H_2O$ 95 : 5) von 54,8 und eine Mindestfilmbildetemperatur von 27 °C.

Beispiel 2

In der Rezeptur von Beispiel 1 wurde die Methacrylsäure durch Acrylsäure ersetzt, in der wäßrigen Vorlage ein pH-Wert von 3 eingestellt und statt 5950 g Vinylchlorid ein Gemisch aus 5658 Vinylchlorid und 293 g Vinyllaurat eingesetzt. Die Zugabe von Ethylen und der Beginn der Voremulsions- und Initiatordosierung erfolgte bereits 30 min nach Reaktionsbeginn bei einem Umsatz von 90 %. Das Produkt zeigte folgende Analysendaten:

| Ethylengehalt: | 17,3 % | Festgehalt: | 48,7 % |
|---|---|---|---|
| Viskosität: | 230 mPa.s | Teilchengröße: | 0,09 μm |
| K-Wert: | 57,3 | Mindestfilmbildetemperatur: | 15 °C |

Beispiel 3

Beispiel 1 wurde mit folgender Rezeptur wiederholt:
Wäßrige Vorlage:

| 4046 g | Wasser |
|---|---|
| 231 g | 15 %ige Na-Dodenylbenzolsufonat-Lösung |
| 83 g | Methacrylsäure |
| 139 g | 30 %ige Acrylamidlösung |

Monomervorlagegemisch:

| 347 g | Butylacrylat |
|---|---|
| 347 g | Methylmethacrylat |
| 231 g | Lusolvan[R] |
| 0,7 g | Mercaptopropionsäure (als Regler) |
| 146 mg | Benzochinon |

Voremulsionsdosiergemisch:

| 2230 g | Wasser |
|---|---|
| 832 g | 35 %ige Nonylphenolpolyethylenoxidsulfat - Lösung |
| 5655 g | Vinylchlorid |
| 292 g | Vinyllaurat |

Die Viskosität lag bei einem Festgehalt von 49,6 % bei 7960 mPa.s. Die restlichen Analysendaten entsprachen Beispiel 2.

Beispiel 4

Beispiel 1 wurde mit folgenden Abänderungen wiederholt: in der Monomervorlage wurde Butylacrylat durch Ethylhexylacrylat und in der Monomerdosierung Vinyllaurat durch Vinylversatat (Ester der Versatic [R]-Säure mit ca. 10 C-Atomen im Säurerest ersetzt) . Die Ethylen- und Voremulsionszugabe begannen bei 93 % Umsatz der Komponenten a und b.
Analysendaten der Copolymerdispersion:

| Ethylengehalt: | 20,8 % | Festgehalt: | 48.4 % |
|---|---|---|---|
| Viskosität: | 400 mPa.s | Teilchengröße: | 0,1 $\mu$m |
| K-Wert: | 52,5 | Mindestfilmbildetemperatur: | 13,5 °C |

Beispiel 5

Beispiel 4 wurde wiederholt, Ethylhexylacrylat aber durch Butylmethacrylat ersetzt.
Analysendaten der Copolymerdispersion:

| Ethylengehalt: | 21 % | Festgehalt: | 47 % |
|---|---|---|---|
| Viskosität: | 360 mPa.s | Teilchengröße: | 0,1 $\mu$m |
| K-Wert | 45 | Mindestfilmbildtemperatur: | 16 °C |

Vergleichsbeispiel A

Beispiel 4 wurde wiederholt, anstelle des Gemisches von Methylmethacrylat und Ethylhexylacrylat wird nur Butylacrylat verwendet. Der Ansatz koagulierte beim Abblasen.

Vergleichsbeispiel B

Beispiel 4 wurde wiederholt, anstelle des Gemisches von Methylmethacrylat und Ethylhexylacrylat wurde nur Methylmethacrylat verwendet.

Analysendaten der Dispersion:

| Ethylengehalt: | 24 % | Festgehalt: | 46 % |
|---|---|---|---|
| Viskosität: | 280 mPa.s | Teilchengröße | 0,1 $\mu$m |
| K-Wert: | 41 | Mindestfilmbildetemperatur: | 14 $^\circ$C |

Vergleichsbeispiel C

Beispiel 10 aus EP-A-76 511 wurde wiederholt.
Analysendaten der Dispersion:

| Ethylengehalt: | 17 % | Festgehalt: | 50,1 % |
|---|---|---|---|
| Viskosität: | 39 mPa.s | Teilchengröße: | 0,1 $\mu$m |
| K-Wert: | 35 | Mindestfilmbildetemperatur: | 23 $^\circ$C |

B) Anwendungstechnische Untersuchungen

Prüfung der Wasseraufnahme

Zur Prüfung der Wasseraufnahme wurden luftgetrocknete Dispersionsfilmstücke einer Größe von 5 cm x 5 cm und einer Dicke von 0,2 - 0,4 mm 3 Std. bei 50 $^\circ$C gelagert, in einem Exsikkator über Calciumchlorid abgekühlt und gewogen. Anschließend wurde 24 Stunden in Wasser bei 23 $^\circ$C gelagert. Nach Beendigung der Lagerung wurden die Filmstücke mit einem Fensterleder abgetupft und wieder gewogen. Die Wasseraufnahme ergab sich aus dem auf das Anfangsgewicht bezogenen Gewichtszuwachs.

Prüfung des Weißanlaufens

Auf eine schwarze Glasplatte wurde mit einem 0,2 mm Drahtrakel ein Dispersionsfilm aufgebracht und 2 Stunden bei 50 $^\circ$C getrocknet. Die Glasplatte wurde anschließend zur Hälfte in Wasser von 23 $^\circ$C gestellt und beobachtet, wann der Dispersionsfilm eine über einen Referenzgrauwert definierte weißliche Trübung erreichte. Im gleichen Versuch wurde beobachtet, ob und nach welcher Zeit sich der Film von der Glasplatte ablöst.

Prüfung der Rißbildung

Mit der zu prüfenden Dispersion wurden Farben nach einer Testrezeptur mit einem üblichen Pigment/Füllstoffgemisch einer Pigmentvolumenkonzentration (PVK) von 56 und 58 % (Volumenteile Pigment/Volumenteile Gesamt) hergestellt. Die Mindestfilmbildetemperatur wurde durch Zugabe empirisch ermittelter Mengen Butyldigylcolacetat auf 0 $^\circ$C normiert.

Diese Farben wurden als Keilschicht mit einer maximalen Naßstärke von 1 mm auf Spanplatten als saugendem Untergrund aufgezogen und 48 Stunden bei Normklima getrocknet.

Die Beurteilung der sich gegebenenfalls bildenden Risse erfolgte nach ISO 4628 Teil 4 - 1982 mit einer Notenskala von 0 (keine Risse) bis 5 (viele starke Risse).

Prüfung der Wasch- und Scheuerbeständigkeit

Zur Prüfung der Wasch- und Scheuerbeständigkeit nach DIN 53778, Teil 2, wurde mit den zu untersuchenden Dispersionen eine hochgefüllte Standardinnenanstrichfarbe mit eine Pigmentvolumenkonzentration von 80 bzw. 83,3 % hergestellt. Die Mindestfilmbildetemperatur wurde durch Zugabe empirisch ermittelter Mengen Butyldiglycolacetat auf 0 $^\circ$C normiert. Die Prüfung erfolgte 7 bzw. 28 Tage nach dem Aufziehen der Farbe.

Die Ergebnisse der anwendungstechnischen Prüfung sind in der folgenden Tabelle zusammengestellt.

**Patentansprüche**

1. Verfahren zur Herstellung wäßriger Copolymerdispersionen mit Festgehalten von 45 - 55 Gewichts-% durch Emulsionspolymerisation von

Anwendungstechnische Kenndaten zu den Beispielen 1 - 5 und Vergleichsbeispielen B und C

| Beispiel | Wasseraufnahme nach 24 h in % | Weißanlaufen (h) | Ablösung von der Glasplatte (h) | Rißbildung PVK 56 | PVK 58 (Note) | Wasch- und Scheuerbeständigkeit (Scheuerzyklen) PVK | Lagerung 7 d | Lagerung 28 d |
|---|---|---|---|---|---|---|---|---|
| 1 | 15,0 | 3 | 3 | 0 | 2 | 80 | 1150 | 2060 |
| 2 | 8,9 | 1,5 | >24 | 0 | 0-1 | 80 | 900 | 1380 |
| 3 | 6,9 | 2,5 | 20 | 0-1 | 1 | 80 | 572 | |
| 4 | 10,9 | >6 | >24 | 0 | 0 | 83,3 | 370 | 1150 |
| 5 | 7,7 | >6 | >24 | 0 | 0 | 80 | 1950 | |
| Vergleich B | 50,3 | 0,08 | 2 | 2 | 2 | 83,3 | 127 | 390 |
| Vergleich C | 9,0 | 2,0 | >24 | 5 | 5 | 83,3 | 42 | - |

a) 75 - 95 Gewichtsteilen von Acrylsäure- und/oder Methacrylsäure -$C_1$- bis-$C_{10}$-Alkylestern, von denen 20 - 80 Gewichts-% eine Wasserlöslichkeit von höchstens 2g/l und 20 - 80 Gewichts-% eine Wasserlöslichkeit von mindestens 10g/l aufweisen.

b) 5- 25 Gewichtsteile eines Gemisches ethylenisch ungesättigter, funktioneller und wasserlöslicher Monomeren mit einem Anteil von 25 - 100 Gewichts-% an ungesättigten Carbonsäuren,

c) 500 - 1700 Gewichtsteilen eines Gemisches von 70 - 100 Gewichts-% Vinylchlorid, 0 bis 30 Gewichts-% eines oder mehrerer Vinylester gesättigter $C_2$- bis $C_{18}$-Carbonsäuren und 0 bis 1,5 Gewichts-% eines mehrfach ungesättigten Monomeren, das einer Wasserlöslichkeit von höchstens 5g/l besitzt, und

d) Ethylen

mittels Radikalinitiatoren in Gegenwart von Emulgatoren und gegebenenfalls weiterer üblicher Zusätze, **dadurch gekennzeichnet,** daß

(1) die unter a) und b) genanten Bestandteile zusammen mit 500 - 1000 Gewichtsteilen Wasser und 0,5 - 10 Gewichtsteilen Emulgator bei einem pH-Wert von 2-4 in einem Autoklaven vorgelegt werden, und ihre Polymerisation bei einer Temperatur von 50 - 80 ˚C durch Zugabe eines Initiators begonnen wird,

(2) die unter c) genannten Bestandteile in Form einer wäßrigen Emulsion dosiert werden, sobald die unter a) un b) genannten Bestandteile zu mindestens 50 % und höchstens 99 % umgesetzt sind,

(3) während der Dosierphase ein pH-Wert von 4,5 bis 6,5 eingehalten wird,

(4) ein Ethylendruck von 40 bis 80 bar zu dem unter (2) genannten Zeitpunkt aufgebaut wird und

(5) vor Beginn der Polymerisation oder spätestens zu dem unter (2) genannten Zeitpunkt 10 bis 50 Teile einer inerten organischen Substanz mit einer Wasserlöslichkeit von $10^{-3}$ bis 200 g/l und einem Molekulargewicht von höchstens 1000 zugegeben werden.

2. Verfahren nach Anspruch 1, **dadurch gekennzeichnet,** daß die aus der Komponente c) gebildete Voremulsion in der Weise dosiert wird, daß sich der Ethylendruck im Reatkionsbehälter nicht selbstständig erhöht.

3. Verfahren nach Anspruch 1 oder 3, **dadurch gekennzeichnet,** daß als weniger wasserlösliche Ester der Komponente a) Butyl(meth)acrylat und/oder Ethylhexylacrylat und als stärker wasserlösliche Ester der Komponente a) Ethylacrylat und/oder Metylmethacrylat eingesetzt werden.

4. Verfahren nach einem der vorangehenden Ansprüche, **dadurch gekennzeichnet,** daß als Komponente b) Acrylsäure, Methacrylsäure und/oder Acrylamid verwendet werden.

5. Verfahren nach einem der vorangehenden Ansprüche, **dadurch gekennzeichnet,** daß als Vinylester der Komponente c) Vinyllaurat und/oder vinylester der Versatic[(R)]-säuren zugesetzt werden.

6. Verfahren nach einem der vorangehenden Ansprüche, **dadurch gekennzeichnet,** daß als inerte organische Substanzen ein oder mehrere Ester, Teilester und/oder Polyester ein- und/oder mehrbasischer organischer Säuren mit 1-20 C-Atomen im Säurerest verwendet werden.

7. Verfahren nach einem der vorangehenden Ansprüche, **dadurch gekennzeichnet,** daß als mehrfach ungesättigtes Monomeres in Komponente c) Divinyladipat verwendet wird.

8. Verwendung der nach einem der vorangehenden Ansprüche hergestellten Dispersionen zur Herstellung kunststoffgebundener Putze, sowie von Farben für Außen- und Innenanstriche.

## Claims

1. Process for the preparation of aqueous copolymer dispersions having solids contents of 45 - 55 % by weight by emulsion polymerisation of

a) 75 - 95 parts by weight of $C_1$ to $C_{10}$-alkyl acrylates and/or methacrylates, 20 - 80 % by weight of which have a water solubility of not more than 2 g/l and 80 - 20 % by weight a water solubility of at least 10 g/l,

b) 5 - 25 parts by weight of a mixture of ethylenically unsaturated, functional and water-soluble monomers containing 25 - 100 % by weight of unsaturated carboxylic acids,

c) 500-1700 parts by weight of a mixture of 70 - 100 % by weight of vinyl chloride, 0 - 30 % by weight of one or more vinyl esters of saturated $C_2$ to $C_{18}$-carboxylic acids and 0 - 1.5 % by weight of a polyunsaturated monomer having a water solubility of no more than 5 g/l, and

d) ethylene

by means of a free radical initiator in the presence of emulsifiers and, if desired, further conventional additives, characterised in that

(1) the components mentioned in a) and b) are initially introduced together with 500 - 1000 parts by weight of water and 0.5 - 10 parts by weight of emulsifier at a pH of 2 - 4 into an autoclave, and their polymerisation is started at a temperature of 50 - 80° C by adding an initiator,

(2) the components mentioned in c) are metered in in the form of an aqueous emulsion as soon as at least 50 % and not more than 99 % of the components mentioned in a) and b) have been converted,

(3) a pH of 4.5 - 6.5 is maintained during the metering phase,

(4) an ethylene pressure of 40 - 80 bar is established at the time mentioned in (2), and

(5) 10 to 50 parts of an inert organic substance having a water solubility of $10^{-3}$ to 200 g/l and a molecular weight of not more than 1000. are added before the beginning or the polymerisation or no later than at the time mentioned in (2).

2. Process according to Claim 1, characterised in that the preemulsion formed from component c) is metered in in such a manner that the ethylene pressure in the reaction vessel does not increase by itself.

3. Process according to Claim 1 or 2, characterised in that the less water-soluble ester of component a) used is butyl (meth)acrylate and/or ethylhexyl acrylate and the more water-soluble ester of component a) used is ethyl acrylate and/or methyl methacrylate.

4. Process according to one of the preceding claims, characterised in that component b) used is acrylic acid, methacrylic acid and/or acrylamide.

5. Process according to one of the preceding claims, characterised in that the vinyl ester of component c) added is vinyl laurate and/or the vinyl ester of Versatic® acids.

6. Process according to one of the preceding claims, characterised in that the inert organic substances used are one or more esters, partial esters and/or polyesters of mono- and/or polybasic organic acids having 1-20 C atoms in the acid radical.

7. Process according to one of the preceding claims, characterised in that the polyunsaturated monomer used in component c) is divinyl adipate.

8. Use of the dispersions prepared according to one of the preceding claims for the preparation of plastic-bound plasters and paints for exterior and interior coatings.

**Revendications**

1. Procédé pour préparer des dispersions aqueuses de copolymères ayant des teneurs en matières solides de 45 à 55% en poids, par polymérisation en émulsion :

a) de 75 à 95 parties en poids (pp) d'acrylates et/ou de méthacrylates d'alkyles en $C_1$-$C_{10}$, dont de 20 à 80% en poids ont une solubilité dans l'eau d'au plus 2 g/litre et de 20 à 80% en poids une solubilité dans l'eau d'au moins 10 g/litre,

b) de 5 à 25 parties en poids d'un mélange de monomères éthyléniques fonctionnels solubles dans l'eau qui contiennent de 25 à 100% en poids d'acides carboxyliques insaturés,

c) de 500 à 1700 parties en poids d'un mélange de 70 à 100% en poids de chlorure de vinyle, de 0 à 30% en poids d'un ou de plusieurs esters vinyliques d'acides carboxyliques saturés en $C_2$-$C_{18}$ et de 0 à 1,5% en poids d'un monomère poly-insaturé qui a une solubilité dans l'eau d'au plus 5 g/l, et

d) d'éthylène,

au moyen d'amorceurs radicalaires, en présence d'émulsionnants et, éventuellement, d'additifs supplémentaires usuels, procédé caractérisé en ce que :

(1) on place dès le départ dans un autoclave les constituants mentionnés sous a) et b) avec de 500 à 1000 parties en poids d'eau et de 0,5 à 10 parties en poids d'un émulsionnant, à un pH de 2 à 4, et on commence à les polymériser à une température de 50 à 80°C par addition d'un amorceur,

(2) on introduit progressivement les constituants mentionnés sous c), sous la forme d'une émulsion aqueuse, dès que les constituants mentionnés sous a) et b) ont réagi à au moins 50% et à au plus 99%,

(3) au cours de la phase d'introduction progressive on maintient le pH entre 4,5 et 6,5,

(4) au moment mentionné sous (2) on crée une pression d'éthylène de 40 à 80 bar, et

(5) avant le début de la polymérisation ou, au plus tard, au moment mentionné sous (2) on ajoute de 10 à 50 parties d'une substance organique inerte ayant une solubilité dans l'eau de $10^{-3}$ à 200 g/litre et une masse moléculaire d'au plus 1000.

2. Procédé selon la revendication 1 caractérisé en ce que la pré-émulsion formée à partir de la composante c) est introduite progressivement de telle façon que la pression éthylène dans le récipient réactionnel ne s'élève pas de façon autonome.

3. Procédé selon l'une des revendications 1 et 2, caractérisé en ce qu'on utilise, comme esters de la composante a) ayant une moindre solubilité dans l'eau, de l'acrylate ou du méthacrylate de butyle et/ou de l'acrylate d'éthylhexyle et, comme esters de la composante a) à plus grande solubilité dans l'eau, de l'acrylate d'éthyle et/ou du méthacrylate de méthyle.

4. Procédé selon l'une quelconque des revendications précédentes caractérisé en ce qu'on utilise, comme composante b), l'acide acrylique, l'acide méthacrylique et/ou l'acrylamide.

5. Procédé selon l'une quelconque des revendications précédentes caractérisé en ce qu'on ajoute, comme esters vinyliques de la composante c), du laurate de vinyle et/ou des esters vinyliques des acides Versatiques®.

6. Procédé selon l'une quelconque des revendications précédentes caractérisé en ce qu'on utilise, comme substances organiques inertes, un ou plusieurs esters, esters partiels et/ou polyesters dérivant de mono- et/ou poly-acides organiques contenant de 1 à 20 atomes de carbone dans le radical de l'acide.

7. Procédé selon l'une quelconque des revendications précédentes caractérisé en ce qu'on utilise de l'adipate de divinyle comme monomère poly-insaturé présent dans la composante c).

8. Application des dispersions préparées selon l'une quelconque des revendications précédentes à la préparation de crépis liés par des matières plastiques ainsi que de peintures pour des revêtements d'extérieur et d'intérieur.